# EUROPEAN PATENT APPLICATION

(11) **EP 1 761 094 A1**
(43) Date of publication of application: **07.03.2007**
(21) Application number: 05751496.0
(22) Date of filing: 16.06.2005
(51) Int. Cl.: H04Q 7/38, H04Q 3/58, H04Q 7/34

(54) **COMMUNICATION SYSTEM AND COMMUNICATION METHOD**

(30) Priority: 21.06.2004 JP 2004183140
(71) Applicant: MATSUSHITA ELECTRIC INDUSTRIAL CO., LTD., Osaka 571-8501 (JP)
(72) Inventor: ISHII, Yoshikazu c/o Matsushita El.Ind.Co.Ltd., Chuo-ku, Osaka 540-6319 (JP); TAKASE, Hiroshi c/o Matsushita El.Ind.Co.Ltd., Chuo-ku, Osaka 540-6319 (JP); YAMAMOTO, Tatsuo c/o Matsushita El.Ind.Co.Ltd., Chuo-ku, Osaka 540-6319 (JP)
(74) Representative: Grünecker, Kinkeldey, Stockmair & Schwanhäusser Anwaltssozietät
(86) International application number: PCT/JP2005/011037
(87) International publication number: WO 2005/125258

(57) **Abstract**

A wireless terminal in which the probability that an incoming call is accepted is greatly improved and the load on the circuit switch is lightened. Each of such wireless terminals (120) comprises a wireless LAN interface (126), a cellular wireless interface (127), and a telephone number table (1241) storing an extension number and a cellular number both associated with each other. Each of the wireless terminals (120) searches the telephone number table (1241) on receiving a call switch request from the circuit switch (111), identifies the cellular number concerning the call switch request, and automatically switches the call for the wireless terminal corresponding to the cellular number to a cellular telephone call.

## Description

### Technical Field

The present invention relates to a communication system for realizing voice communications provided with a local area communication line constructed in a predetermined area, a plurality of radio terminal apparatuses, a wireless LAN system and a cellular wireless system, and a communication method.

### Background Art

In recent years, a wireless communication system is introduced into not only a public wireless communication system represented by PDC, IMT2000 and PHS, but also a communication line system which carries out voice communications constructed in a predetermined area such as a local area communication system using PHS. Such a system requires a fowarding function for an outside communication network system to realize communication even when a communication terminal apparatus of the party of communication is outside the predetermined area.
Patent Document 1 discloses a technique for realizing such a communication outside a specified area.

On the other hand, with the widespread use of the Internet, a voice communication system via the Internet has started and further a voice communication system on the Internet has started to be introduced into a communication line system constructed in a predetermined area such as local area and home telephone systems or the like. Patent Document 2 discloses a communication line system using an Internet phone constructed in a predetermined area such as a local area and home.

It is expected that a communication system constructed in a predetermined area which combines a local area wireless phone system and Internet phone technique and uses an IP wireless phone technology will be introduced in the future.
Patent Document 1: Japanese Patent Application Laid-Open No.9-322255
Patent Document 2: Japanese Patent Application Laid-Open No.2003-143323

### Disclosure of Invention

### Problems to be Solved by the Invention

However, in the communication system which fuses the above described conventional techniques, when the radio terminal apparatus moves to the public network system, if a public wireless LAN (Hot Spot) area where an IP wireless phone is available is not sufficiently established, there are few available areas and it is not possible to effectively use a fowarding function for the outside communication network system, which results in a problem of a low probability that a call may be successfully accepted.

Furthermore, as specified in Patent Document 1, in the communication system which fuses the above described conventional techniques, when a call is originated from a radio terminal apparatus which is inside a specified area to another radio terminal apparatus which is outside the specified area, control data and voice data are sent via a circuit switching apparatus which always connects a communication line in the specified area and an outside communication network. Therefore, there is a problem that when many radio terminal apparatuses are accommodated as with a large business establishment, the load on the circuit switching apparatus increases.

It is an object of the present invention to provide a communication system and a communication method capable of drastically improving a probability that a call is successfully received and reducing the load on a circuit switching apparatus.

### Means for Solving the Problem

The communication system of the present invention comprises a local area communication network system constructed in a predetermined area, an outside communication network system where an IP wireless phone is available, a radio terminal apparatus that carries out, when receiving a notice on a transmission switchover request for requesting switchover from extension phone transmission to cellular phone transmission after carrying out extension phone transmission to a call destination in said predetermined area, switchover of transmission to said call destination from extension phone transmission to cellular phone transmission, a circuit switching apparatus that connects the local area communication network system and the outside communication network system and notices, if the call destination is absent in the predetermined area when the extension phone transmission is received, the transmission switchover request to the radio terminal apparatus and a cellular network system where the radio terminal apparatus that has switched over to the cellular phone transmission carries out a direct voice communication with the call destination outside the predetermined area without the medium of the circuit switching apparatus.

Furthermore, the communication system of the present invention comprises a home communication network system constructed in each of plural subscribers' homes, an outside communication network system where an IP wireless phone is available, a radio terminal apparatus that carries out IP phone transmission to a call destination in the subscriber's home and then switches, when receiving a notice on a transmission switchover request for requesting switchover from IP phone transmission to cellular phone transmission, from IP phone transmission to cellular phone transmission to the call destination, a circuit switching apparatus that is installed in a service provider station, connects the home communication network system and the outside communication network system and notices, if the call destination is absent in the subscriber's home when the IP phone transmission is received, the transmission switchover request to the radio terminal apparatus and a cellular network system where the radio terminal apparatus that has switched over to the cellular phone transmission carries out a direct voice communication with the call destination outside the subscriber's home without the medium of the circuit switching apparatus.

The communication method of the present invention is a communication method whereby a local area communication network system constructed in a predetermined area and an outside communication network system are connected by a circuit switching apparatus in the predetermined area and a radio communication apparatus in the predetermined area communicates with a call destination, comprising a step by the radio communication apparatus of carrying out extension phone transmission to the call destination, a step by the circuit switching apparatus of checking, when receiving the extension phone transmission, whether the call destination is present or absent in the predetermined area, a step by the circuit switching apparatus of noticing, when the call destination is absent in the predetermined area, a transmission switchover request for requesting the radio terminal apparatus to switch from extension phone transmission to cellular phone transmission, a step by the radio communication apparatus of switching, when receiving the notice of the transmission switchover request, transmission to the call destination from extension phone transmission to cellular phone transmission and a step by the radio terminal apparatus that has switched over to the cellular phone transmission of carrying out a direct voice communication with the call destination in a cellular network system without the medium of the circuit switching apparatus.

The communication method of the present invention is a communication method whereby a home communication network system constructed in each of plural subscribers' homes and an outside communication network system are connected by a circuit switching apparatus installed in a service provider station and a radio communication apparatus in the subscriber's home communicates with a call destination, comprising a step by the radio communication apparatus of carrying out IP phone transmission to the call destination, a step by the circuit switching apparatus of checking, when receiving the IP phone transmission, whether the call destination is present or absent in the subscriber's home, a step by the circuit switching apparatus of noticing, when the call destination is absent in the subscriber's home, a transmission switchover request for requesting the radio terminal apparatus to switch from IP phone transmission to cellular phone transmission, a step by the radio communication apparatus of switching, when receiving the notice of the transmission switchover request, transmission to the call destination from IP phone transmission to cellular phone transmission and a step by the radio terminal apparatus that has switched over to the cellular phone transmission of carrying out a direct voice communication with the call destination in a cellular network system without the medium of the circuit switching apparatus.

### Advantageous Effect of the Invention

According to the present invention, IP phone transmission using an IP network is carried out when the radio terminal apparatus of the party is within a specified area and the radio terminal apparatus automatically switches over to cellular number transmission when the radio terminal apparatus of the party is outside the specified area, and therefore it is possible to directly communicate through the cellular network even when the radio terminal apparatus of the party is located outside the specified area and thereby drastically improve the probability that a call may be successfully accepted.

Furthermore, according to the present invention, when the radio terminal apparatus of the party is outside the specified area, it is possible to start a call without the medium of the circuit switching apparatus and thereby reduce the load on the circuit switching apparatus.

### Brief Description of Drawings

FIG.1 illustrates a configuration of a communication system according to an embodiment of the present invention;
FIG.2 is a block diagram showing a configuration of a radio terminal apparatus of a communication system according to Embodiment 1 of the present invention;
FIG.3 is a block diagram showing a configuration of a circuit switching apparatus of a communication system according to Embodiment 1 of the present invention;
FIG.4 illustrates a sequence among radio terminal apparatuses in a communication system according to Embodiment 1 of the present invention;
FIG.5 illustrates a call originating sequence from a radio terminal apparatus in a local area to another radio terminal apparatus in the local area of a communication system according to Embodiment 1 of the present invention;
FIG.6 illustrates an example of a table of a position/IP address management section in a communication system according to Embodiment 1 of the present invention;
FIG.7 illustrates a position registration sequence of a radio terminal apparatus in a communication system according to Embodiment 1 of the present invention;
FIG.8 illustrates a call originating sequence from a radio terminal apparatus in a local area to another radio terminal apparatus outside a local area of a communication system according to Embodiment 1 of the present invention;
FIG.9 is a block diagram showing a radio terminal apparatus of a communication system according to Embodiment 2 of the present invention;
FIG. 10 is a block diagram showing a circuit switching apparatus of a communication system according to Embodiment 2 of the present invention;
FIG.11 illustrates a call originating sequence from a radio terminal apparatus in a local area to another radio terminal apparatus outside a local area of a communication system according to Embodiment 2 of the present invention;
FIG.12 is a block diagram showing a configuration of a radio terminal apparatus of a communication system according to Embodiment 3 of the present invention;
FIG. 13 is a block diagram showing a circuit switching apparatus of a communication system according to Embodiment 3 of the present invention;
FIG.14 illustrates an example of a priority setting by a radio terminal apparatus of a communication system according to Embodiment 3 of the present invention;
FIG.15 illustrates a connection sequence when a radio terminal apparatus of the party exists in a local area of a communication system according to Embodiment 3 of the present invention;
FIG.16 is a flow chart showing an example of a call waiting service connection in a communication system according to Embodiment 3 of the present invention;
FIG.17 shows a connection sequence when a communication radio terminal apparatus of the party exists outside a local area of a communication system according to Embodiment 3 of the present invention;
FIG.18 is a flow chart showing a control sequence of a call control section, terminal condition management section, position information/IP address management section and transmission terminal priority detection section according to Embodiment 3 of the present invention;
FIG.19 is a block diagram showing a radio terminal apparatus of a communication system according to Embodiment 4 of the present invention;
FIG. 20 illustrates an example of contents of a notice on the degree of urgency to be transmitted to the party of communication in a communication system according to Embodiment 4 of the present invention;
FIG.21 illustrates a sequence during extension connection when a radio terminal apparatus of the party is located in a local area of a communication system according to Embodiment 4 of the present invention;
FIG.22 illustrates a sequence during cellular connection when a radio terminal apparatus of the party is located outside a local area of a communication system according to Embodiment 4 of the present invention;
FIG.23 is a schematic front view of a radio terminal apparatus of a communication system according to Embodiment 4 of the present invention;
FIG.24 shows a configuration of a communication system according to Embodiment 5 of the present invention;
FIG.25 is a block diagram showing the configuration of a radio terminal apparatus of a communication system according to Embodiment 5 of the present invention;
FIG.26 is a block diagram showing a configuration of a circuit switching apparatus of a home communication network system of a communication system according to Embodiment 5 of the present invention;
FIG.27 shows a transmission sequence from a radio terminal apparatus in the home to another radio terminal apparatus in the home in a communication system according to Embodiment 5 of the present invention;
FIG. 28 illustrates an example of a table of a position information/IP address management section in a communication system according to Embodiment 5 of the present invention;
FIG. 29 illustrates a position registration sequence of a radio terminal apparatus in a communication system according to Embodiment 5 of the present invention; and
FIG.30 illustrates a transmission sequence from a radio terminal apparatus in the home to another radio terminal apparatus outside the home in a communication system according to Embodiment 5 of the present invention.

### Best Mode for Carrying Out the Invention

Now, embodiments of the present invention will be described in detail with reference to the accompanying drawings.

### (Embodiment 1)

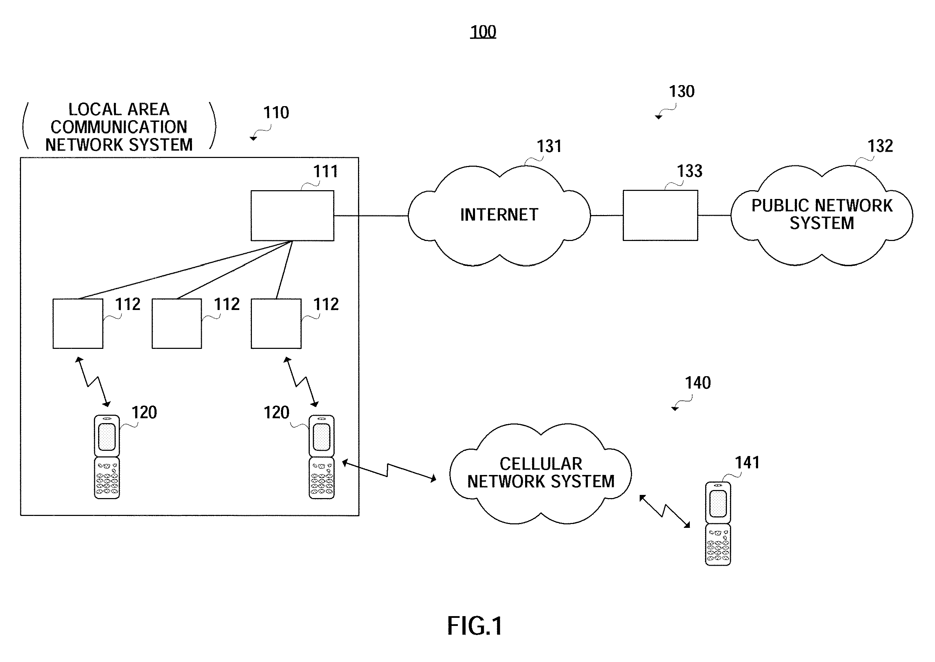

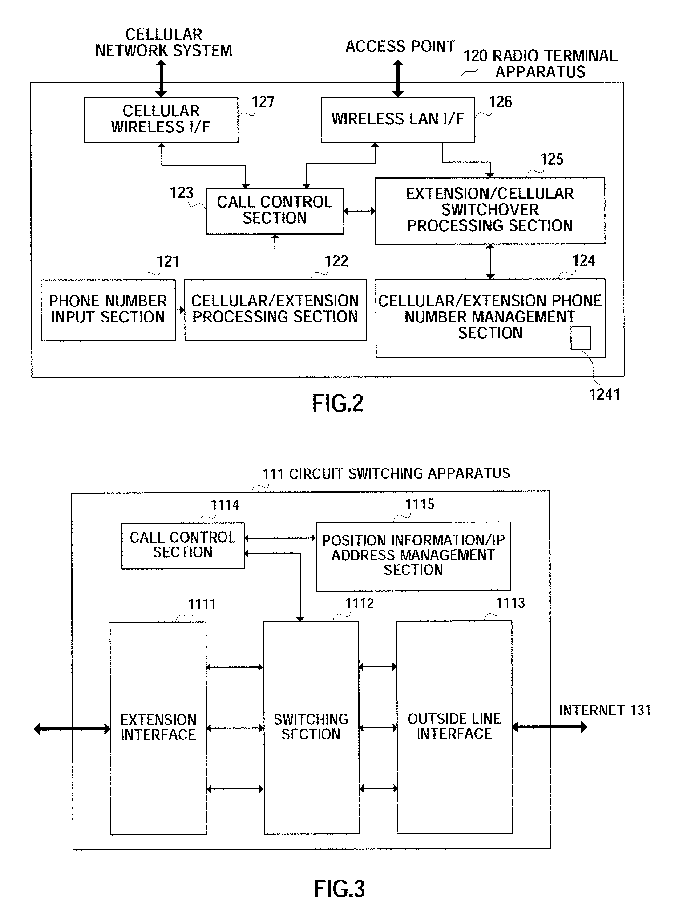

FIG.1 shows a configuration of a communication system according to Embodiment 1 of the present invention. FIG.2 is a block diagram showing a configuration of a radio terminal apparatus of a communication system according to Embodiment 1 of the present invention. FIG. 3 is a block diagram showing a configuration of a circuit switching apparatus of a communication system according to Embodiment 1 of the present invention.

As shown in FIG.1, communication system 100 according to Embodiment 1 of the present invention is provided with local area communication network system 110 constructed and IP-based in a predetermined area, a plurality of radio terminal apparatuses 120, outside communication network system 130 and cellular network system 140.

Circuit switching apparatus 111 of local area communication network system 110 is connected to outside communication network system 130. Communication network system 130 includes Internet 131, public network system 132 and media conversion apparatus 133 that connects Internet 131 and public network system 132.

Local area communication network system 110 includes circuit switching apparatus 111 and a plurality of access point apparatuses 112. Each of the plurality of radio terminal apparatuses 120 can carry out voice communication with each of the plurality of radio terminal apparatuses 120 inside local area communication network system 110 through access point apparatus 112 and circuit switching apparatus 111.

Furthermore, each of the plurality of radio terminal apparatuses 120 can carry out voice communication with each of the plurality of radio terminal apparatuses (not shown) of outside communication network system 130 through access point apparatus 112 and circuit switching apparatus 111. Furthermore, each of the plurality of radio terminal apparatuses 120 can carry out direct voice communication with each of the plurality of radio terminal apparatuses 141 of cellular network system 140.

As shown in FIG.2, radio terminal apparatus 120 is provided with phone number input section 121, cellular/extension processing section 122, call control section 123, cellular/extension phone number management section 124, extension/cellular switchover processing section 125, wireless LAN interface 126 for a wireless IP phone and cellular wireless interface 127 for a public wireless communication system.

Phone number input section 121 is intended for the user to input a phone number of the party of communication. Cellular/extension processing section 122 judges whether the phone number of the party of communication which is inputted from phone number input section 121 is an extension number, cellular phone number, general public telephone number or IP phone number and generates a judgment result.

When the judgment result shows that the phone number of the party of communication is a cellular phone number, cellular/extension processing section 122 gives a cellular call originating instruction to call control section 123. Upon receiving the cellular call originating instruction, call control section 123 originates a call using cellular wireless interface 127. When call control section 123 originates a call through cellular wireless interface 127 (when calling a general cellular radio terminal apparatus), radio terminal apparatus 120 directly communicates with radio terminal apparatus 141 under control of cellular network system 140 through cellular network system 140.

On the other hand, when the judgment result shows that the phone number of the party of communication indicates a number other than the cellular phone number, cellular/extension processing section 122 gives a non-cellular call originating instruction to call control section 123. Upon receiving the non-cellular call originating instruction, call control section 123 originates a call using wireless LAN interface 126 to communicate with the other radio terminal apparatus through local area communication network system 110 or outside communication network system 130.

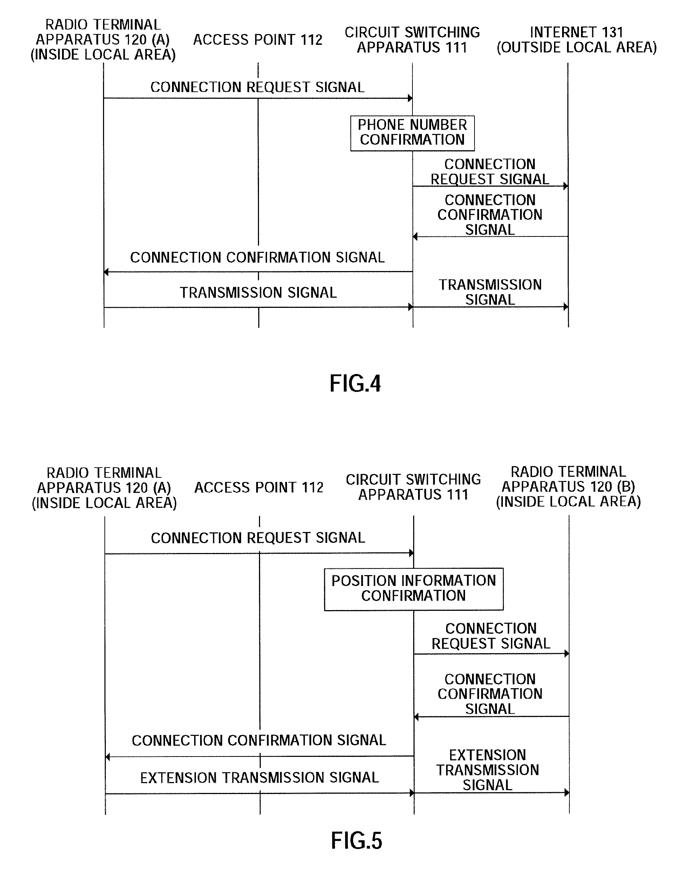

Furthermore, when a call is originated using wireless LAN interface 126 and the call is directed to a radio terminal apparatus which has a general public telephone number or an IP phone number, circuit switching apparatus 111 shown in FIG.3 judges whether the phone number is a general public telephone number or an IP phone number and transmits the phone number included in a connection request signal of the call originating sequence in FIG. 4 to outside communication network system 130.

Cellular/extension phone number management section 124 has phone number table 1241 which stores extension phone numbers in correspondence with cellular phone numbers identifying each of plural radio terminal apparatuses. Extension/cellular switchover processing section 125 searches phone number table 1241 based on the information of the phone number from call control section 123, searches for the extension phone number or cellular phone number of a call which should be originated by call control section 123 and gives the phone number to call control section 123.

As shown in FIG.3, circuit switching apparatus 111 is provided with extension interface 1111, switching section 1112, outside line interface 1113, call control section 1114 and position information/IP address management section 1115.

Position information/IP address management section 1115 manages presence/absence information and IP address information on each of plural radio terminal apparatuses 120 in a predetermined area in correspondence with an extension phone number. Upon receiving an extension phone call originating signal, call control section 1114 checks the presence/absence information of destination radio terminal apparatus 120 of the extension phone call originating signal in a predetermined area and notices a transmission switchover request for requesting radio terminal apparatus 120 to switch extension phone transmission to cellular phone transmission when destination radio terminal apparatus 120 is absent in the predetermined area.

Switching section 1112 transmits a call originated through extension interface 1111 or outside line interface 1113 according to the transmission switchover request from call control section 1114.

When receiving the above transmission switchover request from circuit switching apparatus 111, each of the plurality of radio terminal apparatuses 120 searches phone number table 1241, identifies the cellular phone number corresponding to the transmission switchover request and automatically switches transmission to radio terminal apparatus 120 corresponding to the cellular phone number to cellular phone transmission.

Next, the operation of the communication system according to Embodiment 1 of the present invention will be described in detail with reference to FIG.4 to FIG.8 together with FIG.1 to FIG.3.

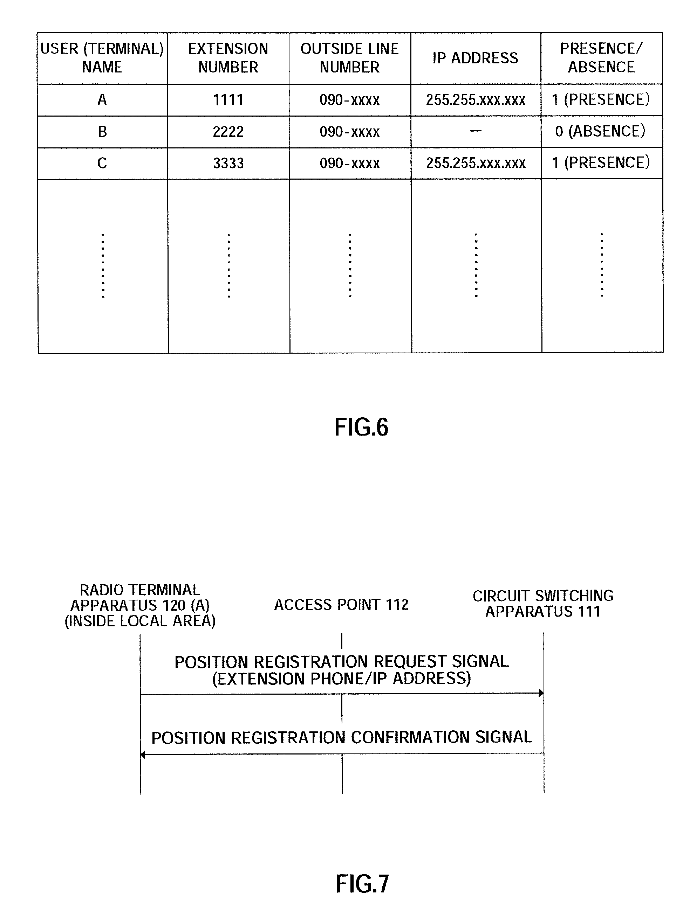

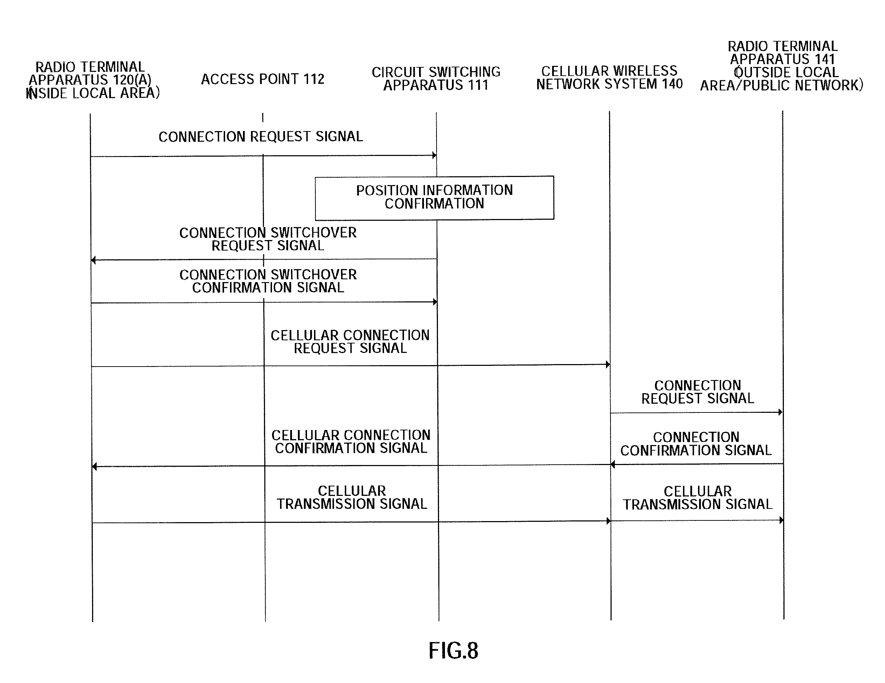

FIG.4 shows a sequence between radio terminal apparatuses in a communication system according to Embodiment 1 of the present invention. FIG. 5 shows a call originating sequence from a radio terminal apparatus in a local area to another radio terminal apparatus in a local area of a communication system according to Embodiment 1 of the present invention. FIG.6illustrates an example of a table of a position/IP address management section in a communication system according to Embodiment 1 of the present invention. FIG.7 illustrates a sequence of position registration of a radio terminal apparatus in a communication system according to Embodiment 1 of the present invention. FIG.8 shows a call originating sequence from a radio terminal apparatus in a local area to another radio terminal apparatus outside a local area in a communication system according to Embodiment 1 of the present invention.

The user of radio terminal apparatus 120 inputs a phone number which identifies radio terminal apparatus 120 of thepartyof communication by operating phone number input section 121 of radio terminal apparatus 120 shown in FIG.2.

Cellular/extensionprocessing section 122 judges whether the inputted phone number of the party of communication is an extension number, cellular phone number, general public telephone number or IP phone number, and gives call control section 123 an instruction to originate a call using cellular wireless interface 127 if the phone number of the party of communication is a cellular phone number,.

On the other hand, if the inputted phone number of the party of communication is other than a cellular number, it gives call control section 123 an instruction to originate a call using wireless LAN interface 126 to make a call through local area communication network system 110 and outside Internet 131.

When originating a call through cellular wireless interface 127 (when calling a general cellular radio terminal apparatus), radio terminal apparatus 120 directly calls radio terminal apparatus 141 under control of cellular network system 140 via cellular network system 140.

With regard to a call originated to a terminal apparatus which has the general public telephone number or an IP phone number using wireless LAN interface 126, call control section 1114 of circuit switching apparatus 111 shown in FIG.3 judges whether the phone number is a general public telephone number or an IP phone number and transmits the phone number included in the connection request signal of the call originating sequence in FIG.4 to outside Internet 131 through outside line interface 1113.

On the other hand, with regard to the call originating sequence for radio terminal apparatus 120 that has an extension phone number, as shown in FIG.5, when call control section 1114 judges that the destination is a radio terminal apparatus that has an extension phone number, circuit switching apparatus 111 that has received a connection request signal checks with position information/IP address management section 1115 as to whether or not the radio terminal apparatus of the party is present/absent in the local area. Position information/IP address management section 1115 registers the extension phone number and presence/absence of each radio terminal apparatus 120 as shown in FIG.6.

As for the position registration (presence/absence registration) of each radio terminal apparatus 120, radio terminal apparatus 120 accesses any one of access points apparatuses 112 in the local area communication network, registers, when an IP address is acquired, the extension phone number and the current IP address of the terminal in position information/IP address management section 1115 of circuit switching apparatus 111 in the position registration sequence as shown in FIG.7 and registers the current IP address in addition to the presence/absence registration as shown in FIG.6.

Such position registration is performed every time radio terminal apparatus 120 moves inside local area communication network 110 and an IP address to be assigned is changed and also performed periodically even when radio terminal apparatus 120 stays at a certain place. Therefore, even when radio terminal apparatus 120 goes out of the local area, it is possible to judge that it has gone out of the local area when there is no position registration within a predetermined period and accurately judge the presence/absence of radio terminal apparatus 120.

When call control section 1114 finds through a position information confirmation that radio terminal apparatus 120 as the call destination exists in the local area, as shown in FIG. 5, call control section 1114 acquires the IP address of radio terminal apparatus 120 as the call destination from position information/IP address management section 1115 and transfers a connection request signal to the IP address through extension interface 1111. Radio terminal apparatus 141 as the call destination which has received the connection request signal returns a connection confirmation signal to radio terminal apparatus 120 via circuit switching apparatus 111, radio terminal apparatus 120 transmits an extension transmission signal to radio terminal apparatus 141 and a call is thereby started between radio terminal apparatus 120 and radio terminal apparatus 141.

On the other hand, when call control section 1114 finds through a position registration information confirmation that radio terminal apparatus 141 exists outside the local area, call control section 1114 transmits a connection switchover request signal for requesting switchover from a call through wireless LAN interface 126 to a call through cellular wireless interface 127, to radio terminal apparatus 120.

Upon receiving the connection switchover request signal, call control section 123 of radio terminal apparatus 120 transmits the connection switchover request signal to extension/cellular switchover processing section 125 and transmits back the connection switchover confirmation signal to circuit switching apparatus 111 through wireless LAN interface 126. Extension/cellular switchover processing section 125 searches for the cellular phone number of radio terminal apparatus 141 stored beforehand in cellular/extension phone number management section 124 and instructs call control section 123 to originate a call via cellular wireless interface 127 using the cellular phone number.

Call control section 123 which has received the call originating instruction via cellular wireless interface 127 originates a call using a cellular phone number, sends it to radio terminal apparatus 141 through cellular network system 140 as shown in FIG.8 and starts a conversation.

According to Embodiment 1 of the present invention, radio terminal apparatus 120 of communication system 100 is provided with wireless LAN interface 126 for an IP phone and cellular wireless interface 127 for a public wirelesscommunicationsystem. Radioterminalapparatus 120 receives a notice as to whether the call destination exists in the local area (in the specified area) or outside the local area (out of the specified area) from circuit switching apparatus 111 simultaneously with call origination, and can thereby adopt IP wireless phone transmission using local area communication network 110 when the call destination exists in the local area and radio terminal apparatus 120 can automatically switch over to cellular number transmission and directly communicate through cellular network system 140 when the call destination exists outside the local area. Therefore it is possible to originate/accept a call via cellular network system 140 even when radio terminal apparatus 120 exists outside the local area and thereby drastically improve the probability that the call may be successfully accepted.

Furthermore, according to Embodiment 1 of the present invention, when radio terminal apparatus 141 of the party exists outside the local area, communication system 100 can directly communicate via cellular network system 140 without the medium of circuit switching apparatus 111 and thereby reduce the load on circuit switching apparatus 111.

### (Embodiment 2)

Next, Embodiment 2 of the present invention will be explained in detail with reference to the accomnpanying drawings.

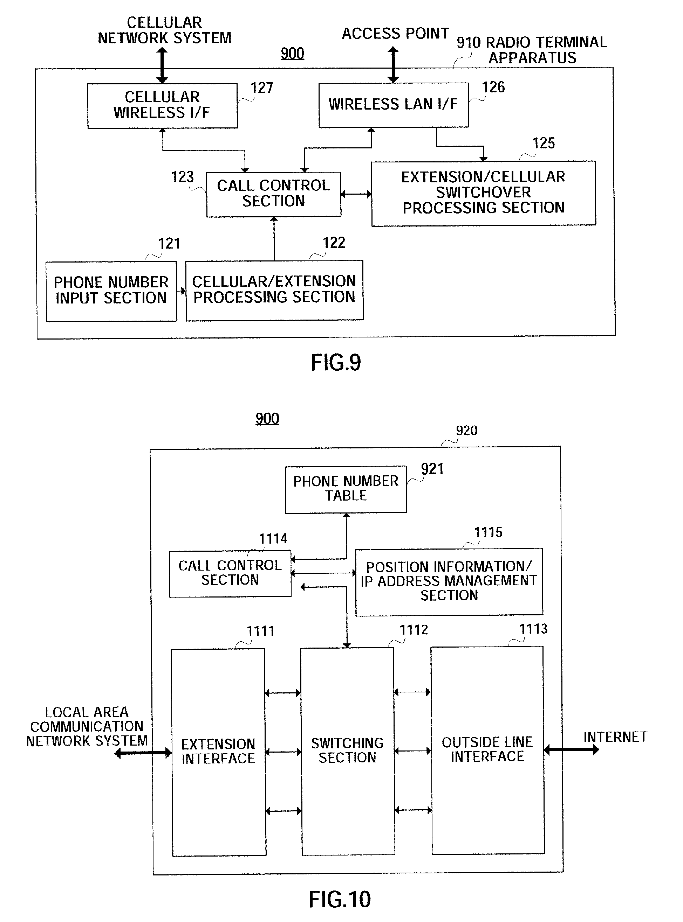

FIG.9 is a block diagram showing a radio terminal apparatus of a communication system according to Embodiment 2 of the present invention. FIG.10 is a block diagram showing a circuit switching apparatus of a communication system according to Embodiment 2 of the present invention. In Embodiment 2 of the present invention, components identical to those in Embodiment 1 of the present invention are assigned the same reference numerals and descriptions thereof will be omitted.

As shown in FIG. 9 and FIG. 10, communication system 900 according to Embodiment 2 of the present invention corresponds to communication system 100 according to Embodiment 1 of the present invention provided with radio terminal apparatus 910 and circuit switching apparatus 920 instead of radio terminal apparatus 120 and circuit switching apparatus 111.

As shown in FIG.9, radio terminal apparatus 910 corresponds to radio terminal apparatus 120 with cellular/extension phone number management section 124 removed. That is, radio terminal apparatus 910 is provided with phone number input section 121, cellular/extension processing section 122, call control section 123, extension/cellular switchover processing section 125 and wireless LAN interface 126 for a wireless IP phone and cellular wireless interface 127 for a public wireless communication system.

As shown in FIG.10, circuit switching apparatus 920 corresponds to circuit switching apparatus 111 with phone number table 921 added. That is, circuit switching apparatus 920 is provided with extension interface 1111, switching section 1112, outside line interface 1113, call control section 1114, position information/IP address management section 1115 and phone number table 921. Phone number table 921 stores extension phone numbers in correspondence with cellular phone numbers identifying each of plural radio terminal apparatuses.

In the communication system according to Embodiment 2 of the present invention, radio terminal apparatus 910 receives a cellular phone number corresponding to a extension phone number of a call originated from circuit switching apparatus 920 and automatically switches over to call origination through the cellular network system. In this way, all radio terminal apparatuses 910 in a corporation need not register the extension/cellular phone numbers and circuit switching apparatus 920 needs only to manage phone number table 921 in a centralized manner.

As shown in FIG.9, radio terminal apparatus 910 does not need cellular/extension phone number management section 124, and on the other hand, circuit switching apparatus 920 has phone number table 921 which manages the correspondence between extension phone numbers and cellular phone numbers of the respective radio terminal apparatuses 910 as shown in FIG.10.

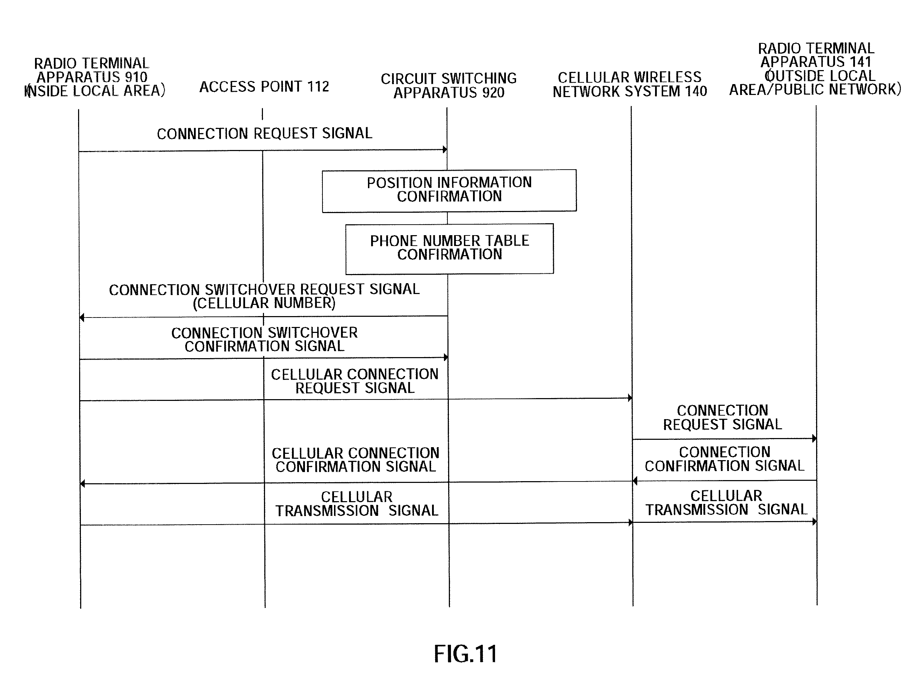

As shown in FIG.11, in a call originating sequence for a radio terminal apparatus which exists outside the local area, circuit switching apparatus 920 sends a connection switchover request signal to radio terminal apparatus 910 with cellular phone number information which has been obtained by searching phone number table 921 carried thereon and radio terminal apparatus 910 which has received it automatically switches over to call origination through cellular network system 140.

Embodiment 2 of the present invention has the same effect as that of Embodiment 1 of the present invention. Furthermore, in Embodiment 2 of the present invention, circuit switching apparatus 920 has phone number table 921 which stores extension phone numbers in correspondence with cellular phone numbers, and can thereby reduce the load on radio terminal apparatus 910. Furthermore, in Embodiment 2 of the present invention, even when the cellular number of each radio terminal apparatus changes due to trouble or a model change of each radio terminal apparatus, circuit switching apparatus 920 registers the cellular numbers collectively, thereby eliminates the necessity for rewriting into each radio terminal apparatus and it is possible to play the role of an electronic telephone directory function provided on the network side.

### (Embodiment 3)

Next, Embodiment 3 of the present invention will be described in detail with reference to the accompanying drawings.

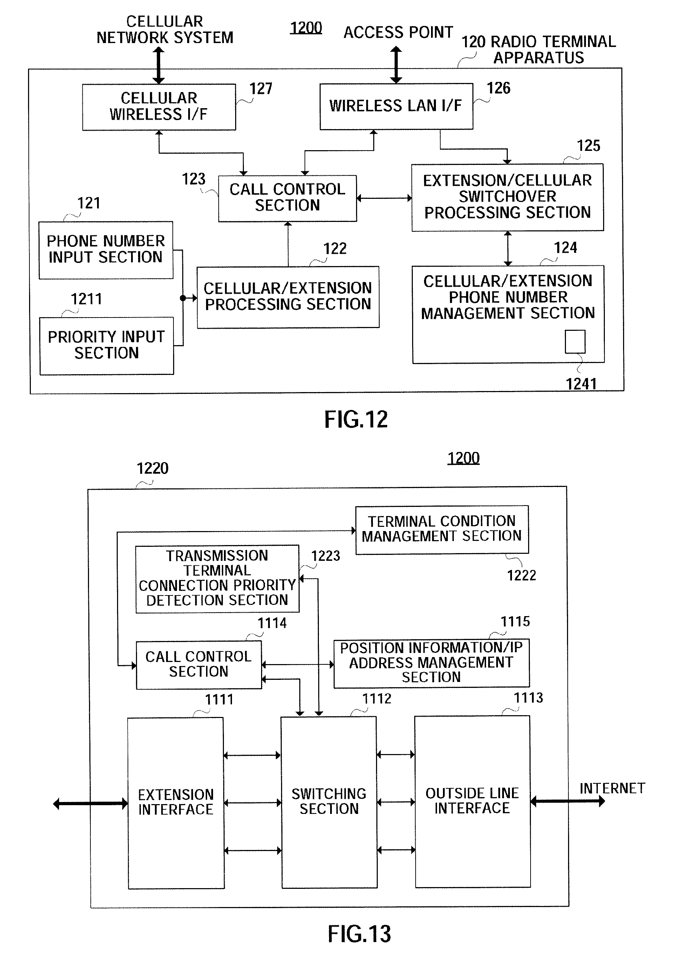

FIG.12 is a block diagram showing a configuration of a radio terminal apparatus of a communication system according to Embodiment 3 of the present invention. FIG.13 is a block diagram showing a configuration of a circuit switching apparatus of a communication system according to Embodiment 3 of the present invention. In Embodiment 3 of the present invention, components identical to those in Embodiment 1 of the present invention are assigned the same reference numerals and descriptions thereof will be omitted.

As shown in FIG.12 and FIG.13, communication system 1200 according to Embodiment 3 of the present invention corresponds to communication system 100 according to Embodiment 1 of the present invention provided with radio terminal apparatus 1210 and circuit switching apparatus 1220 instead of radio terminal apparatus 120 and circuit switching apparatus 111.

As shown in FIG.12, radio terminal apparatus 1210 corresponds to radio terminal apparatus 120 with priority input section 1211 added. That is, radio terminal apparatus 1210 is provided with phone number input section 121, cellular/extension processing section 122, call control section 123, cellular/extension phone number management section 124, extension/cellular switchover processing section 125, wireless LAN interface 126 for a wireless IP phone, cellular wireless interface 127 for a public wireless communication system and priority input section 1211. Priority input section 1211 is intended for the user to select connection priority of communication with the call destination and to input connection priority information.

As shown in FIG.13, circuit switching apparatus 1220 corresponds to circuit switching apparatus 111 provided with call control section 1221 instead of call control section 1114, and further terminal condition management section 1222 and transmission terminal connection priority detection section 1223 added. That is, circuit switching apparatus 1220 is provided with extension interface 1111, switching section 1112, outside line interface 1113, position information/IP address management section 1115, call control section 1221, terminal condition management section 1222 and transmission terminal connection priority detection section 1223.

Transmission terminal connection priority detection section 1223 detects connection priority information of the radio terminal apparatus which is the transmission originator and gives call control section 1221 an instruction about the control of radio terminal apparatus 120. Call control section 1221 controls a call based on the instruction from transmission terminal connection priority detection section 1223. Terminal condition management section 1222 stores and manages the condition as to whether or not radio terminal apparatus 1210 is busy.

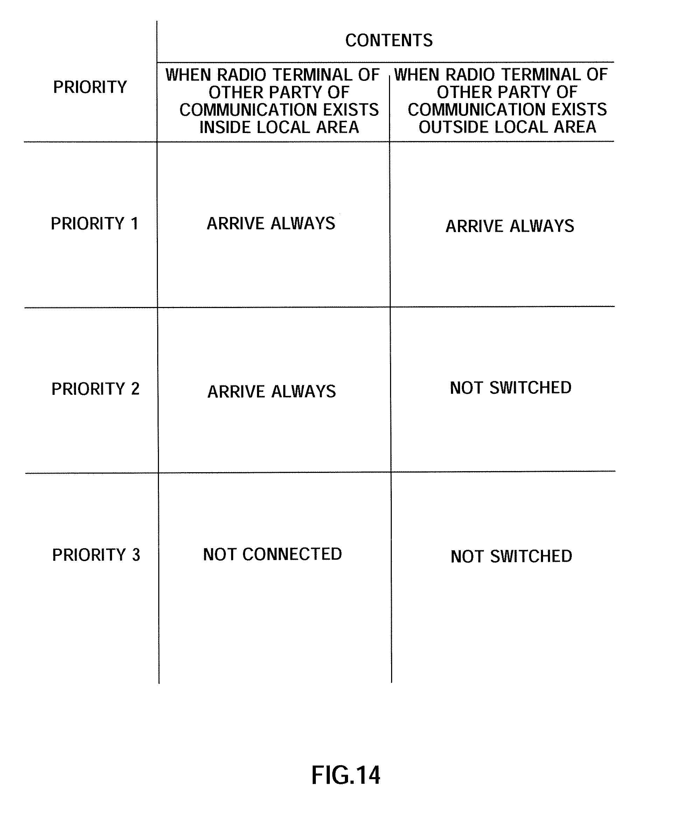

FIG.14 illustrates an example of priority setting by radio terminal apparatus 1210 of the communication system according to Embodiment 3 of the present invention. As shown in FIG.14, for example, priority 1 shows that the radio terminal apparatus of the party exists in the local area and is busy, but it accesses the party of communication like a call waiting service and also automatically switches over to cellular transmission even when it is outside the local area and always accesses the party of communication.

On the other hand, priority 2 shows that a connection is established when the radio terminal apparatus of the party exists in the local area (connected to a call waiting service when the party is busy), but it does not bother to carry out cellular switching transmission when the party exists outside the local area. Further, priority 3 shows that the radio terminal apparatus of the party exists in the local area, but connection is not established when the party is busy (not connected to a call waiting service either).

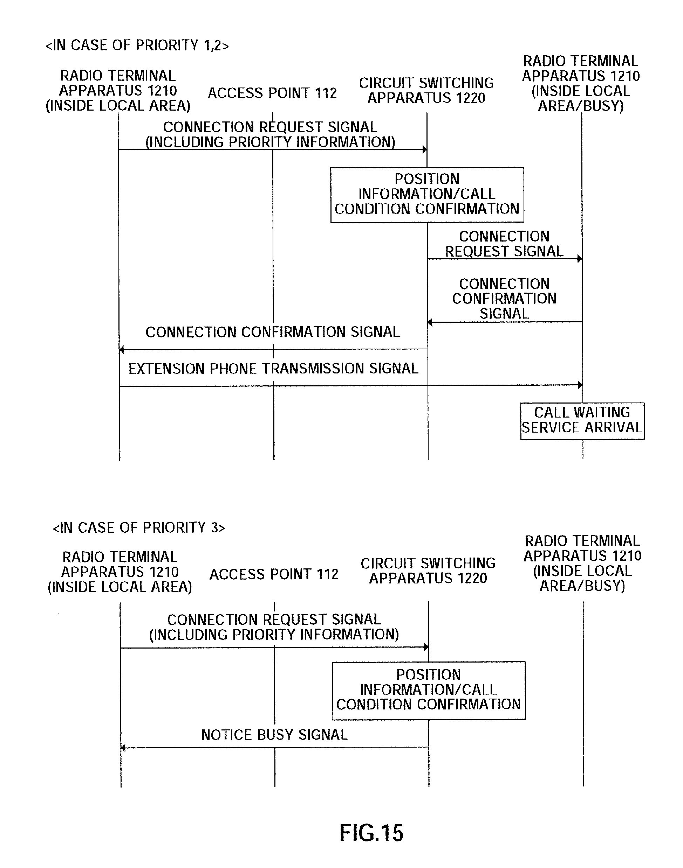

FIG.15 shows a connection sequence when the radio terminal apparatus of the party in the communication system according to Embodiment 3 of the present invention exists in the local area. In the case of priority 1 or 2 above, a connection is established when a call waiting service arrives as shown in FIG.14. In order to realize arrival of a call waiting service here, radio terminal apparatus 1210 needs a call waiting service function which accepts a new call in an extension phone using wireless LAN interface 126 or an outside line phone using cellular wireless interface 127.

Next, a call waiting service connection in the communication system according to Embodiment 3 of the present invention will be described.

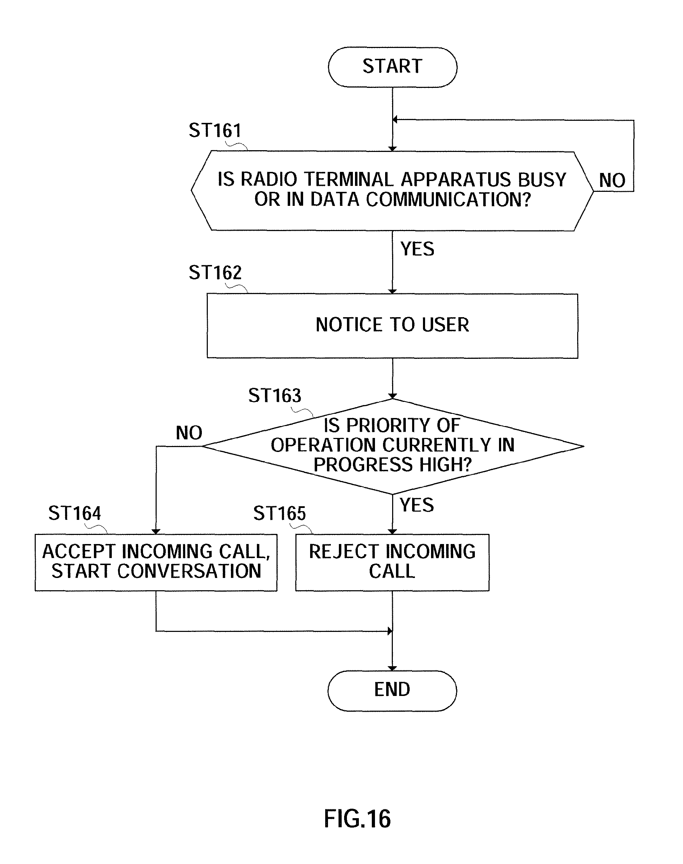

FIG. 16 is a flow chart showing an example of the flow of a call waiting service connection in a communication system according to Embodiment 3 of the present invention.

As shown in FIG.16, in step ST161, circuit switching apparatus 1220 judges whether radio terminal apparatus 1210 is busy or communicating data through cellular wireless interface 127 or wireless LAN interface 126.

When radio terminal apparatus 1210 is busy or communicating data through cellular wireless interface 127 or wireless LAN interface 126 in step ST161, radio terminal apparatus 1210 receives an incoming extension call through wireless LAN interface 126 and notices it to the user of radio terminal apparatus 1210 through the display section and ring tone or the like (step ST162).

Next, the user compares the priority of a telephone conversation or data communication which is the operation currently in progress and a new incoming call, selects and inputs any one of the two. After the input, in step ST163, radio terminal apparatus 1210 judges whether or not the priority of the operation currently in progress is high. When it is judged that the priority of the operation currently in progress is not high in step ST163, radio terminal 1210 accepts the incoming call and starts a conversation (step ST164). When it is judged that the priority of the operation currently in progress is high in step ST163, radio terminal apparatus 1210 refuses the incoming call (step ST165).

Furthermore, in the case of priority 3, circuit switching apparatus 1220 does not connect any call waiting service and notices a busy signal indicating that radio terminal apparatus 1210 of the party is busy.

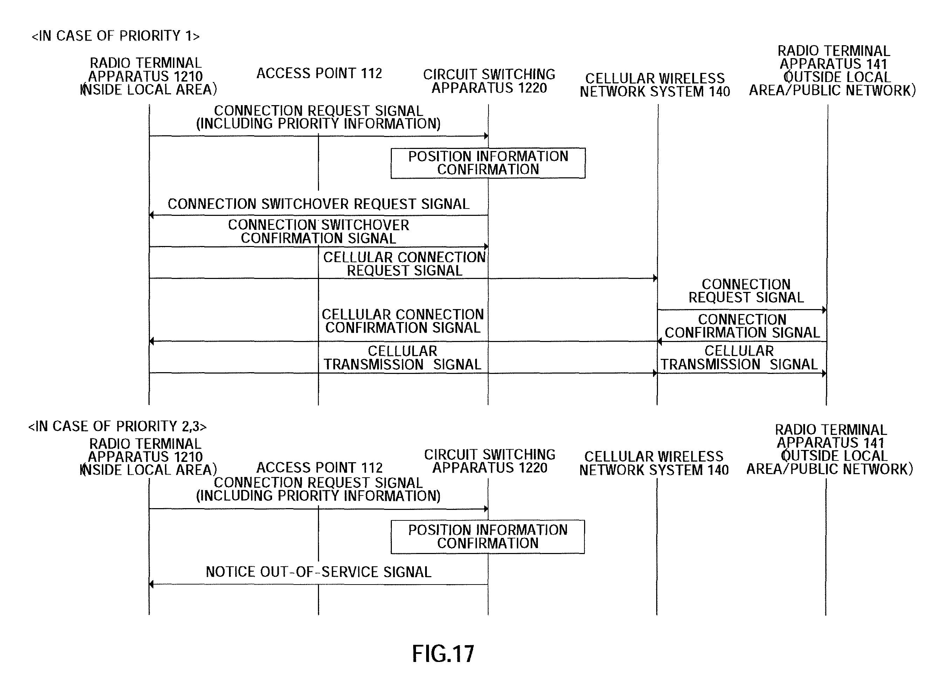

On the other hand, a connection sequence when radio terminal apparatus 141 of the party exists outside the local area is shown in FIG. 17. In the case of priority 1 above, as shown in FIG.17, upon checking the position information of radio terminal apparatus 141 of the party and also checking that radio terminal apparatus 141 exists outside the local area, circuit switching apparatus 1220 sends a connection switchover request signal to radio terminal apparatus 1210. As in the case of Embodiment 1, radio terminal apparatus 1210 automatically switches over to cellular number transmission and accesses radio terminal apparatus 141 which exists outside the local area.

On the other hand, in the case of priority 2 or 3, upon checking that radio terminal apparatus 141 of the party exists outside the local area, circuit switching apparatus 1220 notices an out-of-service signal to radio terminal apparatus 1210 and notices to radio terminal apparatus 1210 which is the transmission originator that radio terminal apparatus 141 of the party does not exist in the local area.

In the case of automatic cellular transmission switching, a case has been described where there is a cellular number/extension number table as in the case of Embodiment 1 but it is possible to notice a cellular number from circuit switching apparatus 920 as in the case of Embodiment 2 of the present invention.

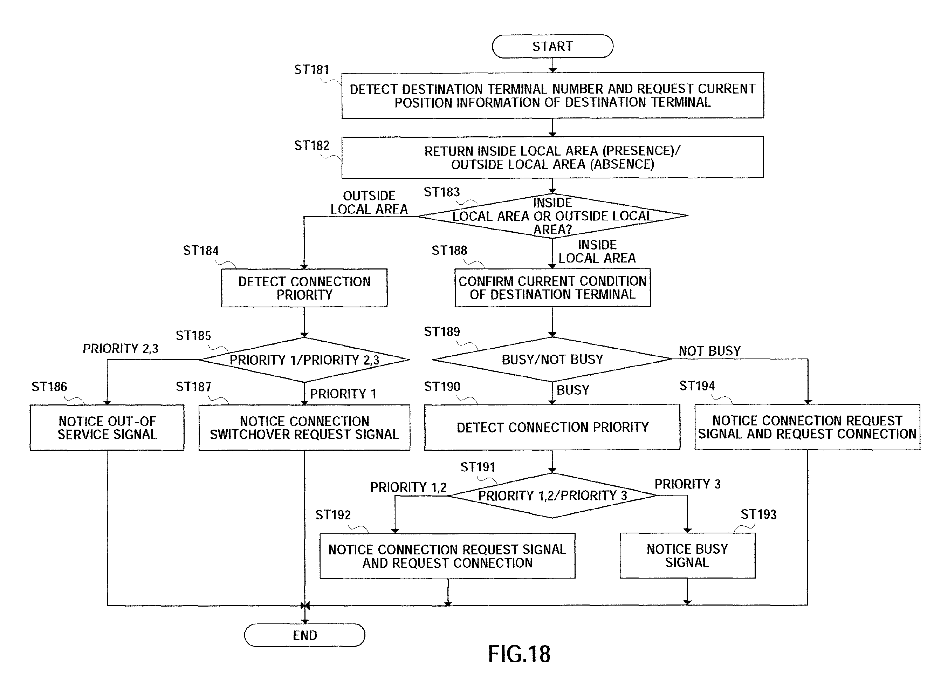

Control of call control section 1221, terminal condition management section 1222, position information/IP address management section 1115 and transmission terminal priority detection section 1223 of Embodiment 3 of the present invention will be described with reference to FIG.18. FIG.18 is a flow chart showing a control sequence of call control section 1221, terminal condition management section 1222, position information/IP address management section 1115 and transmission terminal priority detection section 1223 of Embodiment 3 of the present invention.

First, in step ST181, call control section 1221 detects a destination terminal number and requests position information/IP address management section 1115 for the current position information of the destination radio terminal apparatus. Next, in step ST182, position information/IP address management section 1115 searches for the position information of the destination radio terminal apparatus and hands over information on the position in the local area (present)/outside the local area (absent) to call control section 1221. When the destination radio terminal apparatus is in the local area at this time, position information/IP address management section 1115 also hands over the IP address of the destination radio terminal apparatus together.

Next, in step ST183, call control section 1221 judges whether or not the destination radio terminal apparatus is in the local area. When the destination radio terminal apparatus is not in the local area in step ST182, transmission terminal priority detection section 1223 detects the connection priority (step ST184). Next, call control section 1221 judges in step ST185 whether or not the connection priority is 1. When the connection priority is not 1 in step ST185 (when the connection priority is 2 or 3), call control section 1221 notices an out-of-service signal to the transmission radio terminal apparatus via the inner interface (step ST186).

When connection priority is 1 in step ST185, call control section 1221 notices a connection switchover request signal to the transmission radio terminal apparatus via the inner interface (step ST187).

When the destination radio terminal apparatus is in the local area in step ST183, call control section 1221 checks the current condition (busy or not) of the destination radio terminal apparatus with terminal condition management section 1222 (step ST188). Next, in step ST189, call control section 1221 judges whether or not the line is busy. When the line is busy in step ST189, transmission terminal priority detection section 1223 detects the connection priority (step ST190).

Next, in step ST191, call control section 1221 judges whether the connection priority is 1 or 2. When the connection priority is 1 or 2 in step ST191, call control section 1221 notices a connection request signal to the destination radio terminal apparatus via the inner interface and requests a connection (step ST192).

When the connection priority is not 1 or 2 in step ST191 (when the connection priority is 3), call control section 1221 notices a busy signal to the radio terminal apparatus on the transmitting side via the inner interface (step ST193). When the line is not busy in step ST189, call control section 1221 notices a connection request signal to the destination radio terminal apparatus via the inner interface and requests a connection (step ST194).

Embodiment 3 of the present invention has the same effect as that of Embodiment 1 of the present invention. Furthermore, in Embodiment 3 of the present invention, the connection is automatically changed according to the connection priority on the transmitting side, that is, the presence/absence of a subject which must be transmitted to the party by accessing the party, and in this way, when there is a subject to be immediately transmitted, a connection is allowed to be made immediately. On the other hand, when contact should be made immediately but a connection cannot be established and there is still no problem if a call can be made later again, it is possible to increase the efficiency of the operation without any obstruction even when the destination extension is busy, and in addition, when the terminal is outside the local area, it is possible to reduce communication expenses by canceling the cellular transmission which entails a call charge.

### (Embodiment 4)

Next, Embodiment 4 of the present invention will be described in detail with reference to the accompanying drawings.

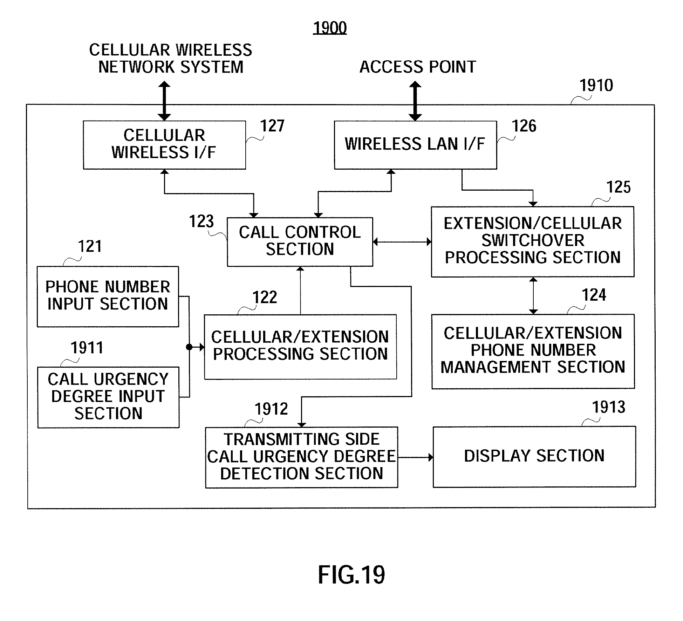

FIG. 19 is a block diagram showing a radio terminal apparatus of a communication system according to Embodiment 4 of the present invention. In Embodiment 4 of the present invention, components identical to those in Embodiment 1 of the present invention are assigned the same reference numerals and descriptions thereof will be omitted.

As shown in FIG.19, communication system 1900 according to Embodiment 4 of the present invention corresponds to communication system 100 according to Embodiment 1 of the present invention provided with radio terminal apparatus 1910 instead of radio terminal apparatus 120.

As shown in FIG.19, radio terminal apparatus 1910 corresponds to radio terminal apparatus 120 with call urgency degree input section 1911, transmitting side call urgency degree detection section 1912 and display section 1913 added. That is, radio terminal apparatus 1910 is provided with phone number input section 121, cellular/extension processing section 122, call control section 123, cellular/extension phone number management section 124, extension/cellular switchover processing section 125, wireless LAN interface 126 for a wireless IP phone, cellular wireless interface 127 for a public wireless communication system, call urgency degree input section 1911, transmitting side call urgency degree detection section 1912 and display section 1913.

Call urgency degree input section 1911 is intended for the user to input communication urgency degree information which indicates the degree of urgency of a call with a call destination. Transmitting side call urgency degree detection section 1912 detects the urgency degree information of the call on the transmitting side, generates an urgency degree detection result and gives it to display section 1913. Display section 1913 displays the urgency degree detection result from transmitting side call urgency degree detection section 1912 and notices it to the user.

In the communication system according to Embodiment 4 of the present invention, radio terminal apparatus 1910 has the function of transmitting the degree of urgency (degree of requesting) of a call of the radio terminal apparatus on the transmitting side, that is, whether or not there is a subject to be immediately transmitted to the party of communication or a subject that may be transmitted to the party of communication after a while.

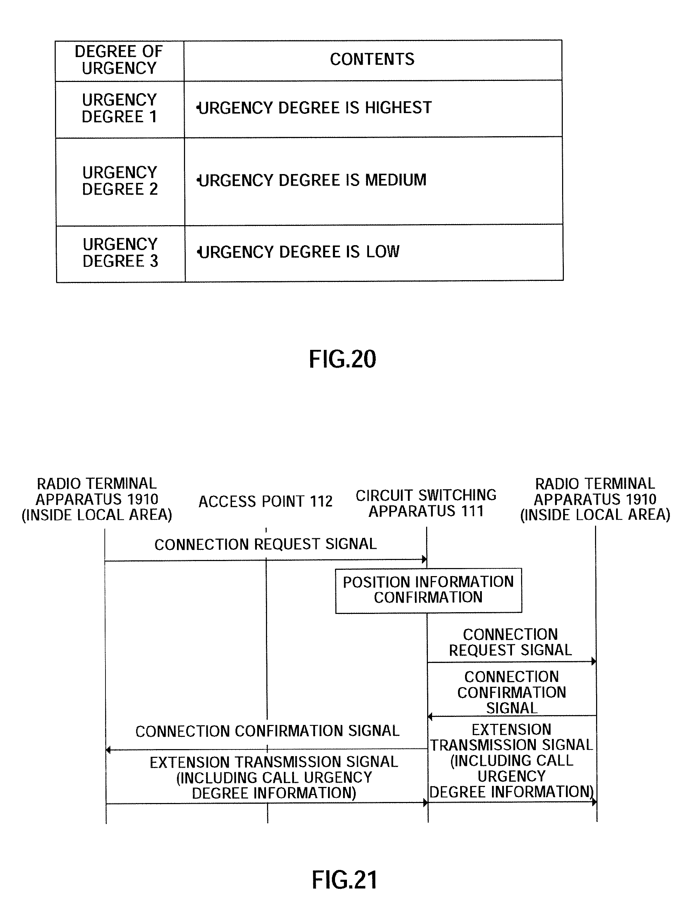

Furthermore, FIG.20 shows an example of notice contents with the degree of urgency to be transmitted to the party of communication. Urgency degree 1 is the highest degree of urgency and indicates there is a subject to be immediately transmitted. Urgency degree 2 is a medium degree of urgency and indicates there is a subject to be transmitted suggesting that the party of communication is requested to answer the phone if there is no problem with the condition of the party of communication but if the party of communication cannot answer the phone by any means, the party of communication is requested to call back later. Urgency degree 3 is a low degree of urgency and suggests that if the party of communication cannot answer the phone now, the caller will call back later.

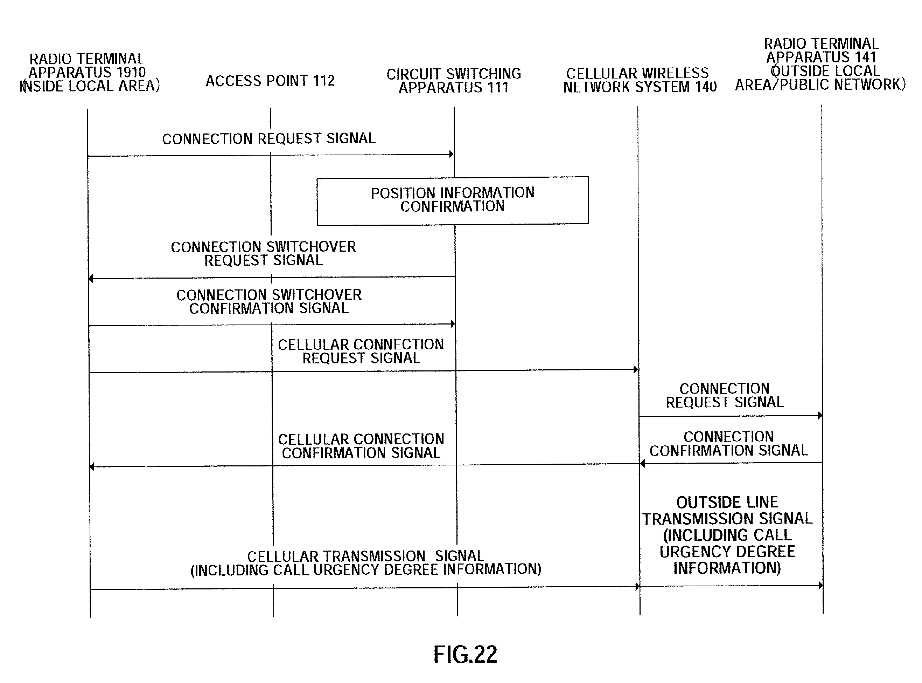

FIG.21 shows an extension connection sequence when the radio terminal apparatus of the party of communication exists in the local area. FIG.22 shows a cellular connection sequence when the radio terminal apparatus of the party of communication exists outside the local area.

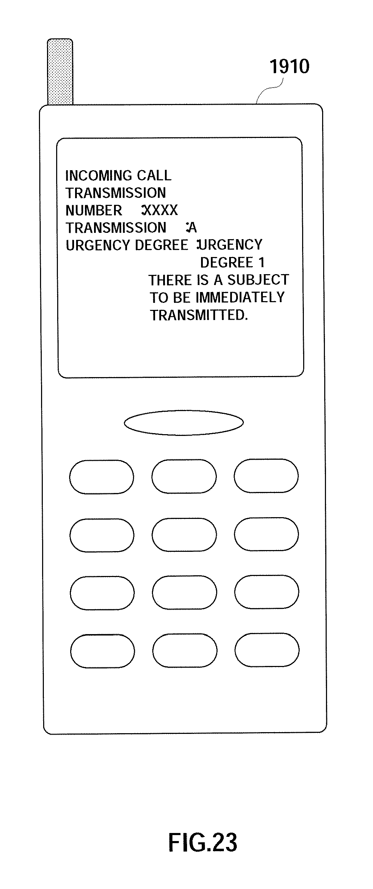

As shown in FIGs.21 and 22, call urgency degree information is noticed to the party of communication together with an extension phone transmission signal and cellular transmission signal. The radio terminal apparatus which has received the call urgency degree information needs the function of displaying the urgency degree detection result on display section 1913 of radio terminal apparatus 1910 together with the phone number of the transmission terminal apparatus and the sender name or the like as shown in FIG.23 and noticing them to the call recipient.

Note that during an extension call, the call urgency degree information is superimposed to the transmission signal and radio terminal apparatus 1910 on the receiving side has the function of detecting the call urgency degree information through transmitting side communication urgency degree detection section 1912 shown in FIG. 19 and the function of displaying the urgency degree detection result on display section 1913. In this case, during cellular transmission, the cellular network system also needs the function of detecting the fact that call urgency degree information is included and noticing the call urgency degree information to the radio terminal apparatus on the call receiving side.

Embodiment 4 of the present invention can be combined with Embodiment 3 of the present invention. That is, the connection priority with respect to the radio terminal apparatus on the receiving side is switched over according to the degree of call urgency with respect to the connection of the radio terminal apparatus on the transmitting side and the degree of call urgency is noticed to the radio terminal apparatus of the party and the connectability with the radio terminal apparatus on the receiving side is further increased, and it is thereby possible to transmit the subject.

Embodiment 4 of the present invention has the same effect as that of Embodiment 1 of the present invention. Furthermore, in Embodiment 4 of the present invention, the degree of call urgency with respect to the connection of the radio terminal apparatus on the transmitting side is noticed to the radio terminal apparatus on the receiving side, the connectability is thereby increased and the user on the receiving side can judge whether or not the user can answer the phone according to the degree of call urgency on the transmitting side, and for example, when a call with a low degree of call urgency arrives during a meeting, the user can cancel the connection and concentrate on the meeting, and can thereby improve the efficiency of operation.

### (Embodiment 5)

Next, Embodiment 5 of the present invention will be described in detail with reference to the accompanying drawings.

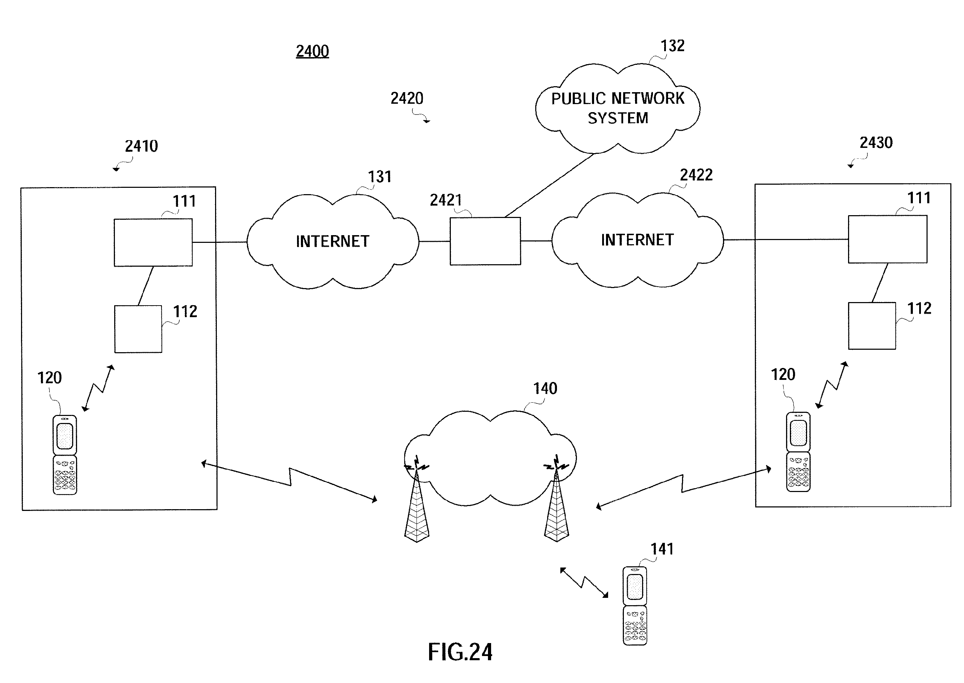

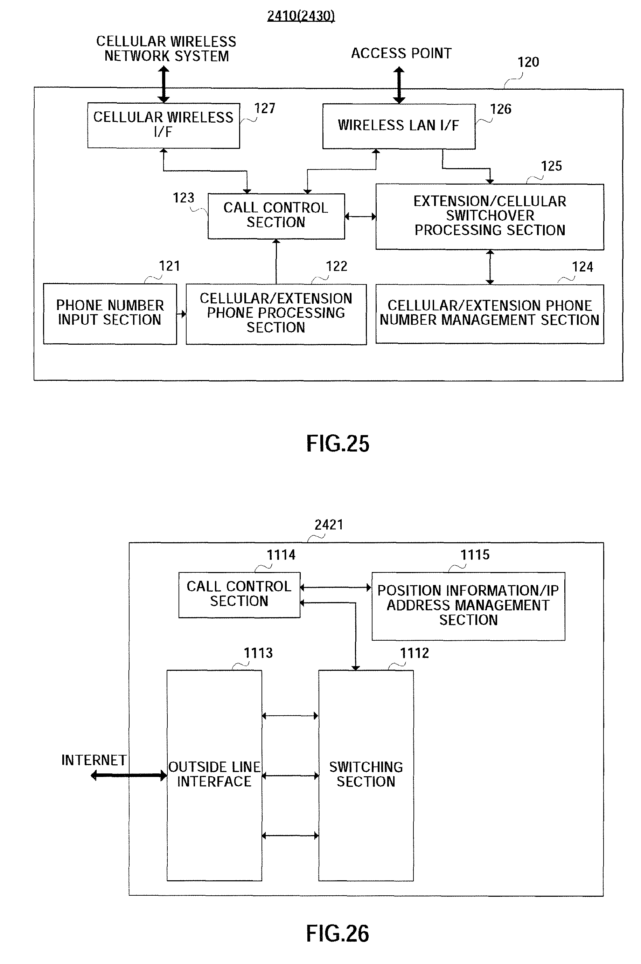

FIG.24 shows the configuration of a communication system according to Embodiment 5 of the present invention. FIG.25 is a block diagram showing a configuration of a radio terminal apparatus of a communication system according to Embodiment 5 of the present invention. FIG.26 is a block diagram showing a configuration of a circuit switching apparatus in a home communication network system of the communication system according to Embodiment 5 of the present invention. In Embodiment 5 of the present invention, components identical to those in Embodiment 1 of the present invention are assigned the same reference numerals and explanations thereof will be omitted.

As shown in FIG.24, communication system 2400 according to Embodiment 5 of the present invention is provided with home communication network system 2410 which is constructed in a home and IP-based, a plurality of radio terminal apparatuses 120, outside communication network system 2420, cellular network system 140 and home communication network system 2430 which is constructed in a home and IP-based.

Communication network system 2420 is provided with Internet 131, public network system 132, circuit switching apparatus 2421 which is a service provider station and Internet 2422. Circuit switching apparatus 2421 in the service provider station connects Internet 131, public network system 132 and Internet 2422.

Circuit switching apparatus 111 of home communication network system 2410 is connected to outside Internet 131. Circuit switching apparatus 111 of home communication network system 2430 is connected to outside Internet 2422.

Home communication network systems 2410 and 2430 are each provided with circuit switching apparatus 111 and access point apparatus 112. Furthermore, each of the plurality of radio terminal apparatuses 120 can carry out a voice communication with each of the plurality of radio terminal apparatuses (not shown) of outside communication network system 2420 through access point apparatus 112 and circuit switching apparatus 111. Furthermore, each of the plurality of radio terminal apparatuses 120 can carry out a direct voice communication with each of the plurality of radio terminal apparatuses 141 of cellular network system 140.

As shown in FIG.25, radio terminal apparatus 120 is provided with phone number input section 121, cellular/extension processing section 122, call control section 123, cellular/extension phone number management section 124, extension/cellular switchover processing section 125, wireless LAN interface 126 for a wireless IP phone and cellular wireless interface 127 for a public wireless communication system.

As shown in FIG.26, circuit switching apparatus 2421 in the service provider station is provided with switching section 1112, outside line interface 1113, call control section 1114 and position information/IP address management section 1115.

As shown in FIG.24, communication system 2400 according to Embodiment 5 of the present invention is a system that realizes an IP phone through the Internet using circuit switching apparatus 2421 of the service provider station in an environment where a subscriber's home can access the Internet through circuit switching apparatus 111 which supports an ADSL or FTTH system or the like.

Moreover, in communication system 2400 according to Embodiment 5 of the present invention, each home is provided with a wireless LAN environment such as IEEE802.11 and can implement an IP wireless phone using radio terminal apparatus 120 provided with wireless LAN interfaces 126 such as IEEE 802.11 as shown in FIG.25 and is further provided with cellular wireless interface 127 and can thereby implement a telephone via cellular network system 140, as well.

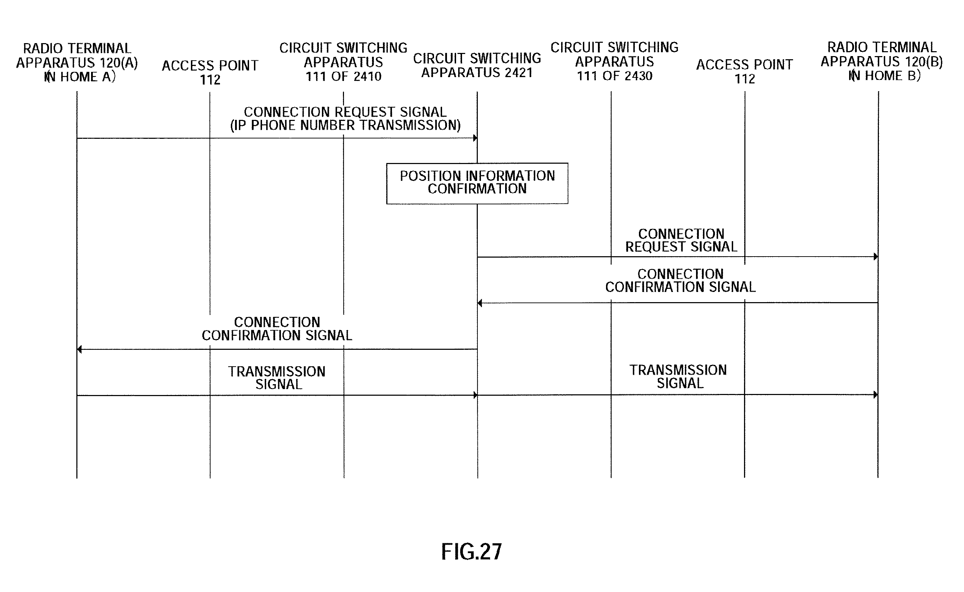

Next, the operation of communication system 2400 according to Embodiment 5 of the present invention will be described using FIG.27 to FIG.30 as well as FIG.24 to FIG.26.

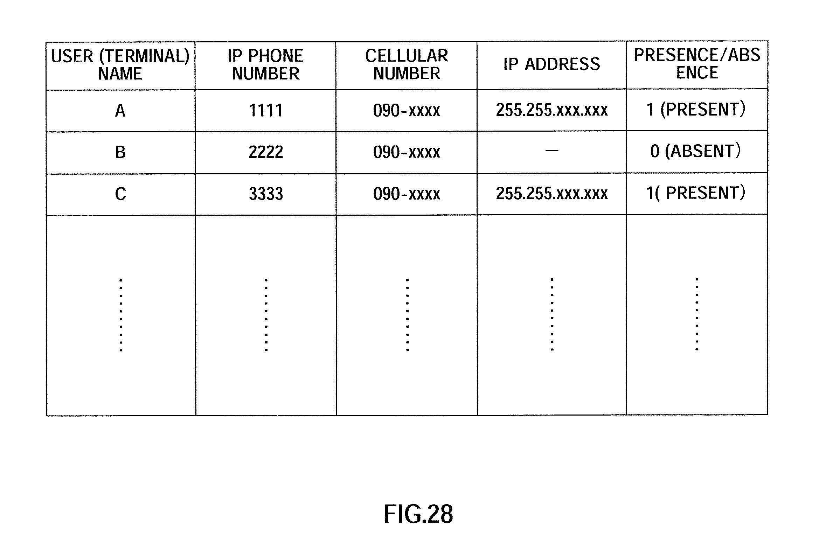

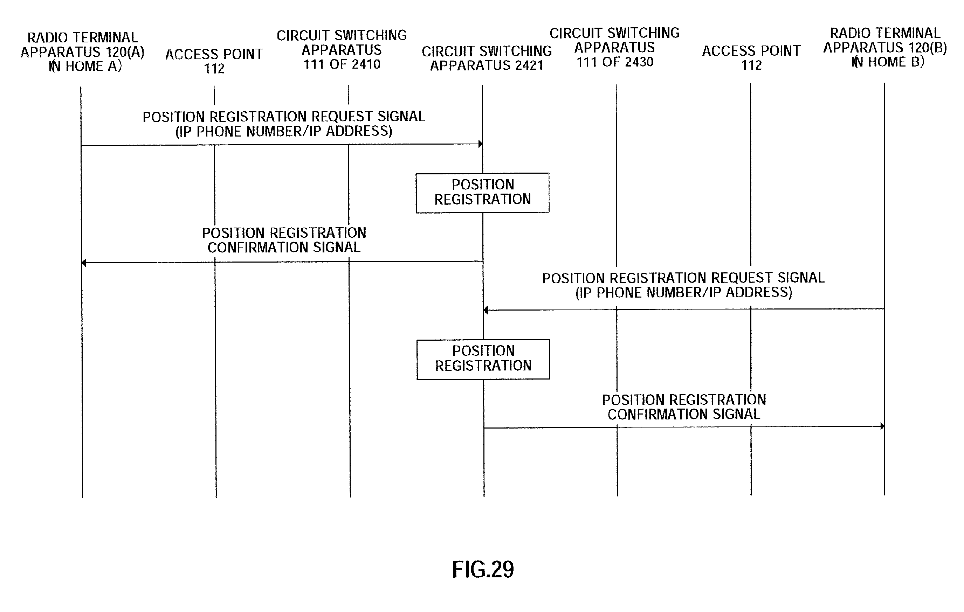

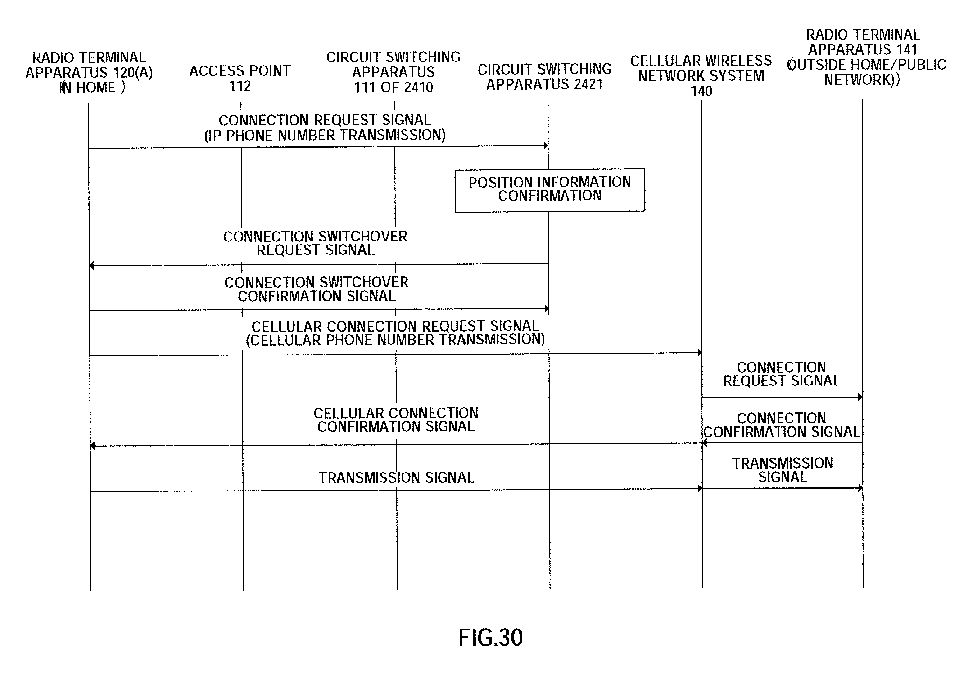

FIG.27 shows a transmission sequence from a radio terminal apparatus in the home to another radio terminal apparatus in the home in communication system 2400 according to Embodiment 5 of the present invention. FIG.28 shows an example of a table of a position information/IP address management section in communication system 2400 according to Embodiment 5 of the present invention. FIG.29 shows a position registration sequence of a radio terminal apparatus in communication system 2400 according to Embodiment 5 of the present invention. FIG.30 shows a transmission sequence from a radio terminal apparatus in the home to another radio terminal apparatus outside the home in communication system 2400 according to Embodiment 5 of the present invention.

The user of radio terminal apparatus 120 inputs a phone number of the party of communication using phone number input section 121 of radio terminal apparatus 2410 shown in FIG.25. Cellular/extension processing section 122 judges whether the inputted phone number of the party of communication is an IP phone number, cellular phone number or general public telephone number. When the inputted phone number of the party of communication is a cellular phone number, cellular/IP phone processing section 122 gives an instruction to call control section 123 to originate a call using cellular wireless interface 127.

The user of radio terminal apparatus 120 inputs a phone number which identifies the radio terminal apparatus of the party by operating phone number input section 121 of radio terminal apparatus 120 shown in FIG. 25.

Cellular/extension processing section 122 judges whether the inputted phone number of the party of communication is an extension number, cellular phone number, general public telephone number or IP phone number and if the phone number of the party of communication is a cellular phone number, cellular/extension processing section 122 gives an instruction to call control section 123 to originate a call using cellular wireless interface 127.

On the other hand, if the inputted phone number of the party of communication is other than a cellular number, cellular/extension processing section 122 gives an instruction to call control section 123 to originate a call using wireless LAN interface 126 to realize a call through home communication network system 2410 and outside Internet 131.

When originating a call through cellular wireless interface 127 (when calling a general cellular radio terminal apparatus), radio terminal apparatus 120 directly communicates with radio terminal apparatus 141 under control of cellular network 140 via cellular network system 140.

Furthermore, as for a call to terminal apparatus which has a general public telephone number or an IP phone number when a call is originated using wireless LAN interface 126, call control section 1114 of circuit switching apparatus 2421 shown in FIG.26 judges whether the phone number of the party of communication input is a general public telephone number or an IP phone number.

Here, when the inputted phone number of the party of communication is a general public telephone number, a signal is sent to public network system 132. On the other hand, IP phone numbers are divided into subscribers of a system of services provided by the same service provider and other subscribers and the former can receive a specific service, for example, communication fee among subscribers of 0 yen which is currently run by yahoo-BB (registered trademark) Phone.

Hereinafter, a call originating sequence between two radio terminal apparatuses which join an identical system of the present system and also join the system which provides a service using radio terminal apparatus 1410 which has two wireless interfaces as shown in FIG.25 will be described.

As shown in FIG. 27, in a call originating sequence for a radio terminal apparatus which joins an identical service, upon judging through call control section 114 that the transmission destination is a radio terminal apparatus which joins the service, circuit switching apparatus 2421 which has received a connection request signal checks with position information/IP address management section 1115 whether the radio terminal apparatus of the party is present or absent in the home.

Position information/IP address management section 1115 registers an IP phone number, outside line phone number and presence/absence of each radio terminal apparatus as shown in FIG.28. As for the position registration (presence/absence registration) of each radio terminal apparatus, when the radio terminal enters the home and accesses the wireless LAN network system in the home and acquires an IP address, the position registration sequence as shown in FIG.29 is executed, the terminal IP address corresponding to the phone number is registered in position information/IP address management section 1115 of circuit switching apparatus 2421 and the current IP address is registered in addition to the presence/absence registration as shown in FIG.28.

If such position registration is performed every predetermined period of time, even when radio terminal apparatus 120 goes out of the home, if there is no position registration for the predetermined period of time, it is possible to judge that radio terminal apparatus 120 has gone out of the home and accurately keep track of the presence/absence of radio terminal apparatus 120 in the home.

As shown in FIG.27, when position information/IP address management section 1115 finds through position information confirmation that call destination radio terminal apparatus 120 (B) exists in the home, call control section 1114 acquires the IP address of call destination radio terminal apparatus 120(B) from position information/IP address management section 1115 and transfers a connection request signal through outside line interface 1113 to the IP address. Radio terminal apparatus 120(B) of the call destination which has received the connection request signal returns a connection confirmation signal to radio terminal apparatus 120(A) via circuit switching apparatus 2421 and radio terminal apparatus 120(A) transmits a number transmission signal to radio terminal apparatus 120(B) and starts a conversation.

Furthermore, when position information/IP address management section 1115 finds through the position registration information confirmation that radio terminal apparatus 120(B) exists outside the home, call control section 1114 transmits a connection switchover request signal which requests switchover from call origination through wireless LAN interface 126 to call origination through cellular wireless interface 127 to radio terminal apparatus 120(A). Radio terminal apparatus 120(A) which has received the connection switchover request signal sends a connection switchover request signal to extension/cellular switchover processing section 125 and sends back the connection switchover confirmation signal through wireless LAN interface 126 to circuit switching apparatus 2421, searches for the cellular number of radio terminal apparatus 120(B) stored beforehand in cellular/extension number management section 124 and gives an instruction to call control section 123 to originate a call via cellular wireless interface 127 using the cellular number.

Call control section 123 which has received the call originating instruction via cellular wireless interface 127 originates a call using the cellular number, transmits a signal to radio terminal apparatus 120(B) through cellular network system 140 as shown in FIG.30 and starts a conversation.

Embodiment 5 of the present invention can also be applied to any one of Embodiments 2 to 4 of the present invention.

In the communication system of Embodiment 5 of the present invention, the radio terminal apparatus has the wireless LAN interface for an IP wireless phone and the cellular wireless interface for a public wireless communication system, receives a notice as to whether or not the call destination exists in the home (in the specified area) from circuit switching apparatus 2421 of the service provider station simultaneously with call origination, performs IP phone transmission using the Internet when the call destination exists in the home and the radio terminal apparatus automatically switches over to cellular number transmission when the call destination exists outside the home and directly communicates with it through cellular network system 140. Therefore, it is possible to originate/accept a call via the cellular wireless even when the radio terminal apparatus exists outside the home and drastically improve the probability that the call may be successfully accepted.

Furthermore, according to the communication system of Embodiment 5 of the present invention, when the party exists outside the home, it is possible to directly communicate via cellular network system 140 without the medium of circuit switching apparatus 111 and thereby reduce the load on circuit switching apparatus 111.

The present application is based on Japanese Patent Application No. 2004-183140 filed on June 21, 2004, entire content of which is expressly incorporated by reference herein.

### Industrial Applicability

The present invention can drastically improve the probability that a call may be successfully accepted, carry out a communication with the party of communication without the medium of any circuit switching apparatus when the radio terminal apparatus of the party exists outside a specified area, and thereby has an effect of capable of reducing the load on the circuit switching apparatus and is suitable for use in a communication apparatus and a communication method.

## Claims

1. A communication system comprising:
a local area communication network system constructed in a predetermined area;
an outside communication network system where an IP wireless phone is available;
a radio terminal apparatus that carries out, when receiving a notice on a transmission switchover request for requesting switchover from extension phone transmission to cellular phone transmission after carrying out extension phone transmission to a call destination in said predetermined area, switchover of transmission to said call destination from extension phone transmission to cellular phone transmission;
a circuit switching apparatus that connects said local area communication network system and said outside communication network system and notices, if said call destination is absent in said predetermined area when said extension phone transmission is received, said transmission switchover request to said radio terminal apparatus; and
a cellular network system where said radio terminal apparatus that has switched over to said cellular phone transmission carries out a direct voice communication with said call destination outside said predetermined area without the medium of said circuit switching apparatus.

2. The communication system according to claim 1, wherein said radio terminal apparatus comprises a phone number table that stores extension phone numbers in correspondence with cellular phone numbers, searches, when receiving a notice of said transmission switchover request, said phone number table using an extension phone number of said call destination, identifies a cellular phone number of said call destination and switches transmission to said call destination to cellular phone transmission.

3. The communication system according to claim 1, wherein said circuit switching apparatus comprises a phone number table that stores extension phone numbers in correspondence with cellular phone numbers, searches, when receiving said extension phone transmission, said phone number table using an extension phone number of said call destination, identifies a cellular phone number of said call destination and notices the cellular phone number together with said transmission switchover request, and
said radio terminal apparatus switches transmission to said call destination of the cellular phone number received from said circuit switching apparatus to cellular phone transmission.

4. The communication system according to claim 1, wherein said radio terminal apparatus transmits connection priority information indicating priority in a communication with said call destination added to a call originating signal, and
said circuit switching apparatus detects said connection priority information and controls call arrival at said call destination in communication or switchover to said cellular phone transmission according to the priority indicated by said connection priority information.

5. The communication system according to claim 1, wherein said radio terminal apparatus notices said call destination call urgency degree information indicating a degree of urgency of a call with said call destination added to a call originating signal, and
said call destination detects and displays said call urgency degree information.

6. A communication system comprising:
a home communication network system constructed in each of plural subscribers' homes;
an outside communication network system where an IP wireless phone is available;
a radio terminal apparatus that carries out IP phone transmission to a call destination in said subscriber's home and then switches, when receiving a notice on a transmission switchover request for requesting switchover from IP phone transmission to cellular phone transmission, from IP phone transmission to cellular phone transmission to said call destination;
a circuit switching apparatus that is installed in a service provider station, connects said home communication network system and said outside communication network system and notices, if said call destination is absent in said subscriber's home when said IP phone transmission is received, said transmission switchover request to said radio terminal apparatus; and
a cellular network system where said radio terminal apparatus that has switched over to said cellular phone transmission carries out a direct voice communication with said call destination outside said subscriber' s home without the medium of said circuit switching apparatus.

7. The communication system according to claim 6, wherein said radio terminal apparatus comprises a phone number table that stores IP phone numbers in correspondence with cellular phone numbers, searches, when receiving a notice of said transmission switchover request, said phone number table using an IP phone number of said call destination, identifies a cellular phone number of said call destination and switches transmission to said call destination to said cellular phone transmission.

8. The communication system according to claim 6, wherein said circuit switching apparatus comprises a phone number table that stores IP phone numbers in correspondence with cellular phone numbers, searches, when receiving said IP phone transmission, said phone number table using an IP phone number of said call destination, identifies a cellular phone number of said call destination and notices the cellular phone number together with said transmission switchover request, and
said radio terminal apparatus switches transmission to said call destination of the cellular phone number received from said circuit switching apparatus to cellular phone transmission.

9. The communication system according to claim 6, wherein said radio terminal apparatus notices call urgency degree information indicating a degree of urgency of a call with said call destination added to a call originating signal to said call destination, and
said call destination detects and displays said call urgency degree information.

10. A communication method whereby a local area communication network system constructed in a predetermined area and an outside communication network system are connected by a circuit switching apparatus in said predetermined area and a radio communication apparatus in said predetermined area communicates with a call destination, comprising:
a step by said radio communication apparatus of carrying out extension phone transmission to said call destination;
a step by said circuit switching apparatus of checking, when receiving said extension phone transmission, whether said call destination is present or absent in said predetermined area;
a step by said circuit switching apparatus of noticing, when said call destination is absent in said predetermined area, a transmission switchover request for requesting said radio terminal apparatus to switch from extension phone transmission to cellular phone transmission;
a step by said radio communication apparatus of switching, when receiving the notice of said transmission switchover request, transmission to said call destination from extension phone transmission to cellular phone transmission; and
a step by said radio terminal apparatus that has switched over to said cellular phone transmission of carrying out a direct voice communication with said call destination in a cellular network system without the medium of said circuit switching apparatus.

11. A communication method whereby a home communication network system constructed in each of plural subscribers' homes and an outside communication network system are connected by a circuit switching apparatus installed in a service provider station and a radio communication apparatus in said subscriber's home communicates with a call destination, comprising:
a step by said radio communication apparatus of carrying out IP phone transmission to said call destination;
a step by said circuit switching apparatus of checking, when receiving said IP phone transmission, whether said call destination is present or absent in said subscriber's home;
a step by said circuit switching apparatus of noticing, when said call destination is absent in said subscriber's home, a transmission switchover request for requesting said radio terminal apparatus to switch from IP phone transmission to cellular phone transmission;
a step by said radio communication apparatus of switching, when receiving the notice of said transmission switchover request, transmission to said call destination from IP phone transmission to cellular phone transmission; and
a step by said radio terminal apparatus that has switched over to said cellular phone transmission of carrying out a direct voice communication with said call destination in a cellular network system without the medium of said circuit switching apparatus.
